Europäisches Patentamt

(19) European Patent Office

Office européen des brevets

(11) Numéro de publication: **0 125 985**
**A2**

(12) # DEMANDE DE BREVET EUROPEEN

(21) Numéro de dépôt: **84400923.3**

(22) Date de dépôt: **04.05.84**

(51) Int. Cl.³: **F 24 D 11/00**
**F 24 H 1/18, F 24 J 3/02**

---

(30) Priorité: **06.05.83 CA 427562**

(43) Date de publication de la demande:
**21.11.84 Bulletin 84/47**

(84) Etats contractants désignés:
**AT BE DE FR GB IT NL**

(71) Demandeur: **SOLTRAC INC.**
**1080 Beaver Hall, Suite 1810**
**Montreal Québec H2Z 1S8(CA)**

(72) Inventeur: **Jean, Benoît**
**215 Calixa Lavallée**
**Boucherville Quebec J4B 2W2(CA)**

(72) Inventeur: **Bergevin, Benoît**
**427 Picardie**
**Ste-Julie Quebec J0L 2C0(CA)**

(72) Inventeur: **Rheault, Fernand**
**40 Du Belvédère**
**Ste-Julie Quebec J0L 2S0(CA)**

(74) Mandataire: **Nony, Michel**
**Cabinet Nony 29, rue Cambacérès**
**F-75008 Paris(FR)**

---

(54) **Système de chauffage solaire.**

(57) Un système de chauffage d'eau par énergie solaire opérant en circuit fermé et utilisant le changement de phase d'un fluide caloporteur comme mode d'échange thermique.

Ce système qui comprend au moins un capteur (2) exposé au soleil pour transmettre l'énergie radiante du soleil à un fluide caloporteur et ainsi transformer le fluide en un mélange liquide-vapeur, un échangeur de chaleur (7), une pompe (14) pour retourner le fluide caloporteur ayant passé dans l'échangeur de chaleur vers le capteur, et des canalisations (3, 6, 9) pour relier les divers éléments ci-dessus, est caractérisé en ce qu'il comprend en outre un séparateur de phase (4) raccordé à la sortie du capteur; une canalisation (5) pour retourner le liquide récupéré dans le séparateur de phase à la base du capteur de façon à ce que celui-ci soit constamment mouillé; et deux canalisations (6, 9) reliant le séparateur à l'échangeur, l'une (6) pour faire circuler la vapeur vers l'échangeur où elle va se condenser et l'autre (9) pour permettre le retour du liquide condensé vers le séparateur, par l'intermédiaire de la pompe, cette dernière étant située en-dessous du niveau moyen du liquide dans l'échangeur pour assurer le retour du liquide condensé accumulé à la base de l'échangeur vers le séparateur.

FIG. 1

EP 0 125 985 A2

Système de chauffage solaire

La présente invention a pour objet un système de chauffage d'eau par énergie solaire opérant en circuit fermé et utilisant le changement de phase d'un fluide caloporteur comme mode d'échange thermique.

Divers dispositifs ont été réalisés dans le domaine. Ainsi, on peut mentionner les capteurs d'énergie solaire de formes particulières décrits dans le brevet canadien n° 1.087.053. Ces capteurs servent à la fabrication de systèmes de chauffage solaire à changement de phase.

Les brevets canadiens n° 1.107.164 et 1.116.036 réfèrent à des systèmes de chauffage solaire à changement de phase dans lesquels des absorbeurs sont de structure telle qu'ils permettent d'absorber en plus de la chaleur émise par rayonnement, la chaleur émise par convection. Ces absorbeurs sont employés en combinaison avec les pompes à chaleur.

Le brevet canadien n° 1.103.539 traite d'un système de chauffage solaire à changement de phase, hermétiquement fermé, incorporant un séparateur de phase. De par sa nature, ce système fonctionnant en thermosiphon ne requiert aucune pompe mais exige que le condenseur soit situé à un niveau plus élevé que les capteurs. L'objet de la présente invention n'opère pas en thermosiphon et requiert donc une pompe pour fonctionner. De plus, l'échangeur de chaleur est situé plus bas que le niveau des capteurs.

Le brevet des Etats-Unis n° 4.134.390 se rapporte à un système de chauffage solaire à changement de phase faisant spécifiquement appel à des capteurs comportant des cavités élargies. Le système protégé par ce brevet incorpore une pompe à vide qui sert à abaisser la température et le pression d'opération. Un contrôle permanent de la pression du système doit être maintenu. Le système qui fait l'objet de la présente invention s'auto-régularise, ne requiert aucune pompe à vide à son fonctionnement et n'impose aucune contrainte particulière au réseau de canalisation des capteurs.

Le brevet des Etats-Unis n° 4.211.207 a trait à un système de chauffage solaire à changement de phase intégrant à la fois chauffage et réfrigération selon cinq cycles thermodynamiques. Ce système fait appel à des moyens spécifiques de compression et d'expansion de la vapeur pour réaliser les cycles thermodynamiques. La présente invention, par sa simplicité, n'utilise aucun mode de compression ou d'expansion de la vapeur générée aux capteurs dans son mode d'opération.

Le brevet des Etats-Unis n° 4.238.873 protège un système de chauffage solaire à changement de phase qui, de par son mode d'opération, exige que le capteur ait une configuration et une installation bien spécifique pour pouvoir accumuler à sa base une quantité déterminée de liquide en attente. Ce système exige une canalisation complexe capable de maintenir un niveau de liquide bien déterminé dans le capteur; il requiert également une ligne d'équilibre de pression ainsi qu'un réservoir de fluide. Le système solaire proposé dans la présente invention ne fait appel à aucun des éléments requis par le brevet n° 4.238.873. Il n'impose aucune contrainte quant à la configuration et à la disposition des capteurs, aucune exigence particulière n'est nécessaire à l'installation de la canalisation.

Enfin, le brevet des Etats-Unis n° 4.240.405 concerne un chauffe-eau solaire à changement de phase incluant un accumulateur de pression et une chambre à détente.

Les dispositifs mentionnés précédemment ont recours à des montages complexes de maintien de niveau de liquide dans les capteurs, ou à des mécanismes bien précis pour contrôler la pression et la température du système, ou à des configurations très particulières pour assurer un écoulement de fluide soit par thermosiphon, soit par l'addition de réservoir d'accumulation au niveau des capteurs. Ces exigences particulières ont pour effet respectif de compliquer les installations et d'exposer l'échangeur au milieu ambiant.

Contrairement aux dispositifs décrits précédemment, le système selon l'invention réduit les éléments opérationnels au minimum. Aucune exigence particulière n'est requise quant à la configuration des capteurs solaires et à leur installation, lesdits capteurs étant, avec les séparateurs les seuls éléments exposés au milieu ambiant. Aucune autre exigence que l'étanchéité n'est requise de la canalisation. La pression et la température interne de l'ensemble du système sont auto-régularisées sans avoir recours à des mécanismes extérieurs comme pompe à vide, compresseur, détendeur etc. Un réservoir de liquide n'est pas nécessaire.

La présente invention a pour objet un système de chauffage solaire de construction, d'opération et d'installation simplifiées. Les inconvénients relevés dans les autres systèmes ont été éliminés ou contournés, afin de réduire les pertes thermiques et d'augmenter l'efficacité et la durabilité du système.

L'objet de l'invention est atteint grâce à des mécanismes de séparation de phases, de circulation et de pompage que l'on ne rencontre pas dans les systèmes existants.

Plus précisément, le système de chauffage solaire selon l'invention comprend:

- au moins un capteur exposé au soleil pour transférer l'énergie radiante du soleil à un fluide caloporteur et ainsi transformer ledit fluide en un mélange liquide-vapeur;

- un échangeur de chaleur pour transférer à de l'eau la chaleur emmagasinée par le fluide caloporteur dans le capteur;

- une pompe pour retourner le fluide caloporteur vers le capteur; et

- des canalisations reliant les divers éléments mentionnées ci-dessus.

Ce système est caractérisé en ce qu'il comprend
en outre:

- un séparateur de phase raccordé à l'extrémité
du capteur où sort le mélange liquide-vapeur;

- une canalisation pour retourner le liquide
récupéré dans le séparateur de phase vers l'autre extrémité
du capteur de façon à ce que celui-ci soit constamment
mouillé; et

- deux canalisations reliant le séparateur à
l'échangeur, l'une pour faire circuler la vapeur vers
l'échangeur où elle va se condenser, l'autre pour permettre
le retour du liquide condensé vers le séparateur, par l'intermédiaire de la pompe, cette dernière étant située en
dessous du niveau moyen du liquide dans l'échangeur de façon
à assurer le retour du liquide accumulé à la base de l'échangeur vers le séparateur.

La pompe assure de préférence le retour du liquide
de condensation vers le séparateur par action d'une pression
de vapeur générée à partir d'une partie dudit liquide accumulé.
Pour ce faire, la pompe inclut un mécanisme de prélèvement du
liquide et une source de chaleur pour générer de la vapeur à
partir de la partie du liquide prélevé, le tout réduisant la
puissance requise au pompage du liquide.

Le système selon l'invention se caractérise principalement par l'utilisation d'un séparateur de phases conçu
de façon à ce que le transfert de chaleur ne soit accompli
que par la phase gazeuse du fluide caloporteur et de façon à
ce que toute la surface du capteur soit intégralement mouillée
de liquide en tout temps. La circulation de fluide utilisé
est conçue de façon à faciliter l'installation du système et
minimiser les pertes thermiques entre les capteurs et l'échangeur. De plus, l'utilisation d'une source de chaleur comme
moyen d'opération de la pompe permet, en utilisant l'énergie solaire comme source de chaleur, de conférer une autonomie à l'ensemble du système.

Le séparateur selon l'invention est spécialement conçu pour assurer, grâce à son raccordement approprié, une circulation de liquide entre l'entrée et la sortie de l'absorbeur du capteur de façon à ce que celui-ci soit constamment mouillé sur toute sa hauteur.

En plus de créer une circulation forcée de liquide entre l'entrée et la sortie de l'absorbeur, le séparateur permet également de séparer la vapeur générée dans l'absorbeur du liquide. De cette façon, l'échange thermique s'effectuant à l'extérieur du capteur ne se fait qu'avec la vapeur.

Les systèmes de chauffage solaire actuels qui effectuent leur transfert thermique en amenant à ébullition le liquide caloporteur n'utilisent généralement pas de séparateur. Lorsqu'ils en utilisent, leur fonction n'est limitée qu'à séparer la vapeur du liquide; le mouillage intégral de l'absorbeur n'est pas nécessairement assuré, particulièrement dans les thermosiphons.

Une autre caractéristique originale du système proposé est le fait que, bien que le système opère en mode normal, i.e. avec un échangeur de chaleur situé en dessous du niveau des capteurs, le séparateur est directement raccordé à l'entrée du capteur pour assurer une circulation constante de liquide entre la sortie du capteur et son entrée. Contrairement aux autres dispositifs opérant dans le même mode, le retour du liquide de condensation dans l'échangeur se fait non pas directement vers l'entrée du capteur mais par l'intermédiaire du séparateur.

La circulation de la vapeur et le retour du liquide condensé sont assurés par deux canalisations concentriques ou séparées qui relient le séparateur à l'échangeur et à la pompe du système. L'ensemble de ces canalisations est contenu dans une gaine isolante. Un tel concept résuit l'installation à une seule opération. L'ensemble étant pré-assemblé chez le manufacturier, seuls les raccords sont à faire au moment de la mise en place.

L'échangeur de chaleur dans lequel la vapeur générée dans le capteur se condense en liquide étant situé en dessous du niveau de l'entrée du capteur, une pompe est prévue pour remonter le liquide condensé dans l'échangeur au niveau du capteur. Tout mécanisme de pompage traditionnel peut être utilisé. Opérant en circuit fermé, et ayant à pomper des liquides dont les propriétés chimiques peuvent être astreignantes, des contraintes sévères d'étanchéité, de compatibilité, d'entretien et de durabilité sont imposées à ces pompes. Pour éviter certains inconvénients et éliminer les contraintes mentionnées, il est suggéré dans le cadre de la présente invention d'avoir recours à une pompe à pression de vapeur.

Une telle pompe assure le retour du liquide de condensation accumulé vers le séparateur par l'action d'une pression de vapeur généré à partir d'une partie du liquide accumulé, cette partie n'étant prélevée que lorsque le liquide s'accumulant dans le corps de la pompe a atteint un niveau prédéterminé. La génération de vapeur s'effectue à l'aide d'une source de chaleur externe générant de façon continue suffisamment de chaleur pour assurer la vaporisation requise. La partie du liquide à vaporiser est prélevée à l'aide d'un mécanisme de prélèvement approprié et est vaporisée de préférence de façon instantanée pour réduire au maximum la puissance de pompage requise.

Le principe de fonctionnement de cette pompe se résume comme suit. Une petite quantité de liquide accumulé dans un récipient interne est vaporisée à l'intérieur d'un récipient externe fermé. Cette quantité de liquide à vaporiser est prélevée lorsque le niveau du liquide accumulé dans un récipient interne a atteint une valeur prédéterminée. La vaporisation s'effectue par contact sur une surface chaude à l'intérieur du récipient. La vapeur produite génère une pression qui agit directement sur la surface du liquide dans le récipient interne pour pousser ledit liquide hors du récipient vers le capteur. La pompe ne requiert aucun piston; elle ne fait pas appel au déplacement de membranes, ni à un réservoir externe de vapeur sous pression.

La pompe est de préférence constituée de deux récipients verticalement concentriques séparés l'un de l'autre de façon à maintenir un faible volume disponible entre leurs fonds et leurs parois. Le récipient externe, fermé hermétiquement, est fait d'un métal conducteur chauffé en permanence par une source de chaleur extérieure continue capable d'amener à ébullition le liquide entre les parois. Cette source peut être une bande ou plaque chauffante électrique. Ce récipient externe est relié au fond de l'échangeur de chaleur par une entrée de liquide pourvue d'un clapet, et par une soupape à vapeur servant à équilivrer les pressions de l'échangeur et du récipient externe de la pompe lorsque celle-ci se remplit. L'entrée de liquide est placée de façon à ce que le liquide entrant tombe dans le récipient interne.

Le récipient interne est fait en un matériau isolant. Ce récipient qui a son extrémité supérieure en communication avec le volume supérieur du récipient externe, a à sa base une ouverture par laquelle peut passer une partie du liquide s'accumulant pour remplir le volume entre les parois des deux récipients concentriques.

La soupape à vapeur et l'ouverture à la base du récipient interne sont inversement ouverte et fermée au moyen de deux pointeaux d'obturation disposés aux extrémités d'une tige verticale passant à travers un flotteur destiné à flotter sur le liquide s'accumulant dans le réservoir interne. Ce flotteur peut être fait en un matériau isolant pour isoler la surface du liquide s'accumulant.

La longueur de la tige est telle que, lorsque l'ouverture à la base du récipient interne est fermée, la soupape à vapeur est ouverte, et réciproquement. Le poids de la tige et des pointeaux qu'elle supporte doit être suffisant pour fermer l'ouverture à la base du récipient interne lorsque ce dernier est vide ou se remplit. Ce poids doit toutefois ne pas excéder la force générée par la poussée d'Archimède sur le flotteur, de façon à ce que ce dernier puisse soulever la tige lorsque le niveau du liquide dans le réservoir interne atteint une valeur prédéterminée.

A ce moment, une petite quantité de liquide peut s'écouler par l'ouverture à la base du récipient, pour venir se vaporiser au contact de la paroi du récipient externe. Simultanément, le pointeau supérieur vient fermer la soupape à vapeur pour éviter que la pression de vapeur entrain de se générer chute.

Cette pression assure un retour du liquide accumulé dans le réservoir interne vers le séparateur par l'intermédiaire d'une sortie de liquide pourvue d'un clapet.

Comme on peut le comprendre, le fonctionnement de la pompe ne dépend que du niveau du liquide accumulé et de la pression interne de ladite pompe, sans besoin de moyens de contrôle externe. De plus, tous les éléments de la pompe sont fixes, à l'exception de la tige et du flotteur.

L'invention sera mieux comprise à l'aide de la description non-limitative qui va suivre.

Sur les planches de dessins annexées:

la figure 1 représente une vue générale d'un mode de réalisation préféré d'un système de chauffage par énergie solaire selon l'invention;

la figure 2 est une vue agrandie de la pompe illustrée sur la figure 1;

la figure 3 est une vue agrandie du séparateur illustré sur la figure 1;

la figure 4 représente une vue en coupe transversale de la canalisation reliant le séparateur à l'échangeur et à la pompe du système, selon les points C-C de la figure 1; et

la figure 5 est une vue agrandie d'une variante de la pompe illustrée sur la figure 2.

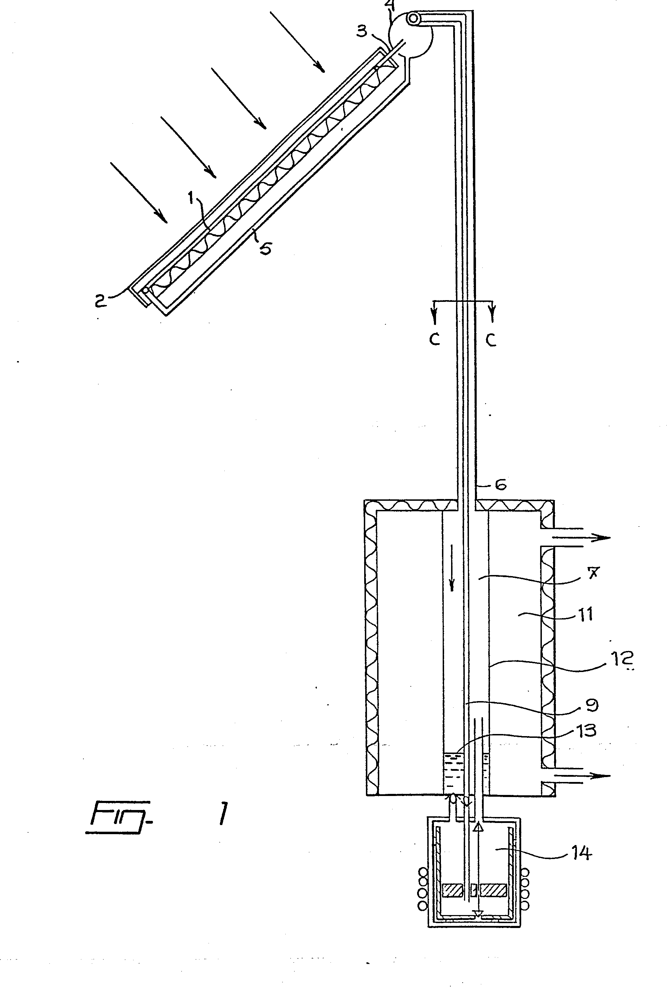

Le système illustré sur la figure 1 comprend un capteur solaire 2 pourvu d'un absorbeur 1.

Sous l'effet de la radiation solaire illustrée à l'aide de flèches sur la figure 1, le fluide contenu dans l'absorbeur 1 du capteur 2 est amené à ébullition. Sous l'effet de la pression, le mélange de vapeur et de liquide généré dans l'absorbeur s'échappe par un tuyau 3 dans un séparateur 4. La vapeur est libre de circuler dans la partie libre du séparateur 4 alors que le liquide tombe par gravité dans le bas du séparateur 4 pour retourner à la base de l'absorbeur 1 du capteur 2 via un tuyau 5. La vapeur s'échappe du séparateur 4 par un tuyau de sortie 6 pour aller se condenser dans un échangeur de chaleur 7 placé à l'extré-mité du tuyau 6.

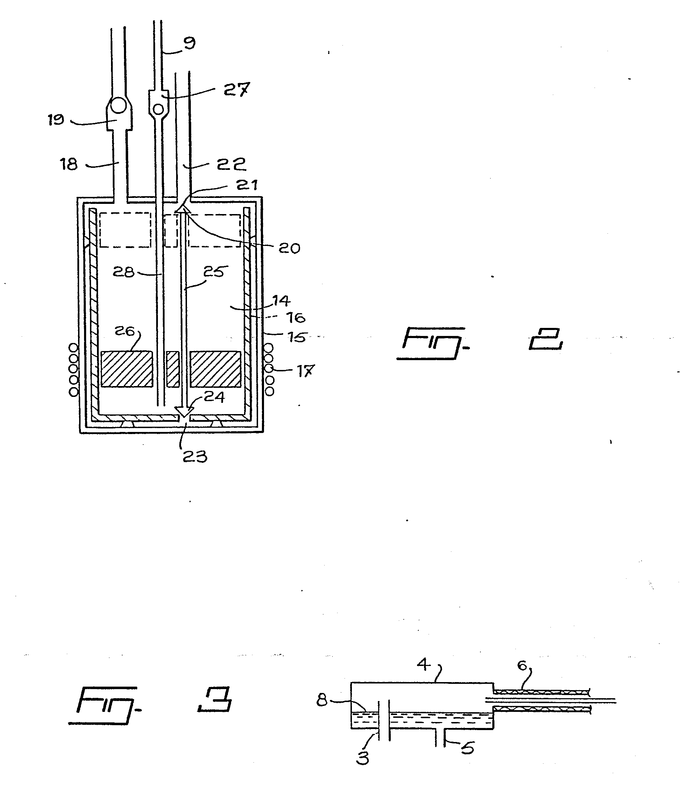

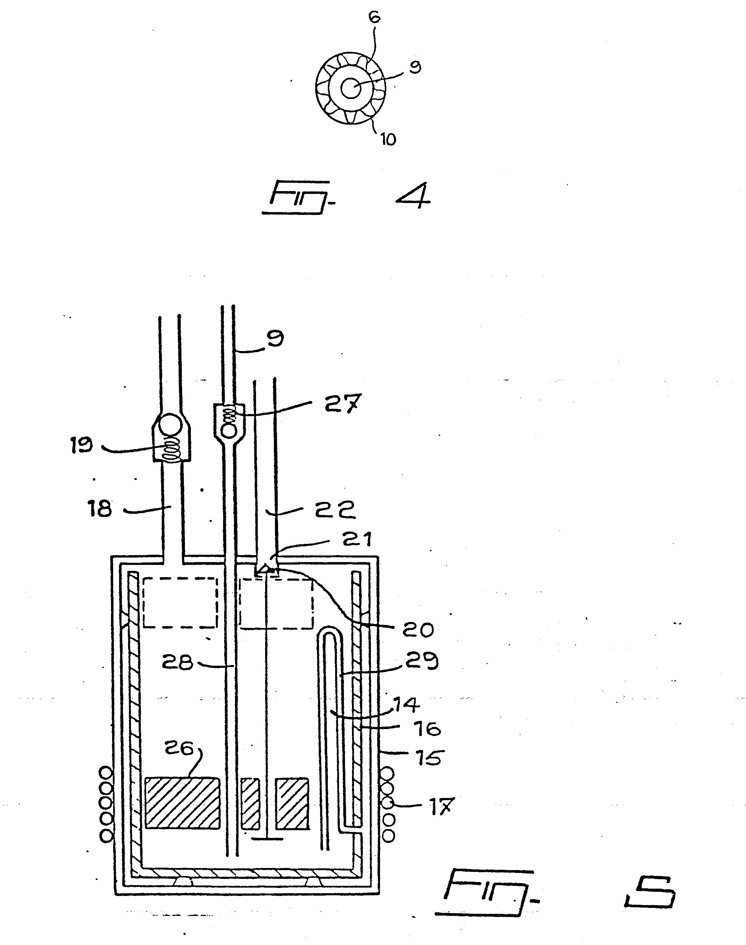

Tel qu'illustré sur la figure 3, le séparateur 4 est un réservoir dont la capacité de rétention de liquide sous le niveau limite 8 correspondant à la hauteur à laquelle se trouve le tuyau 6, est égale à au moins la moitié du volume de liquide que peut contenir l'absorbeur 1 du capteur 2.

Tel qu'illustré sur les figures 1 et 3, le retour du liquide condensé vers le séparateur 4 se fait par un tuyau 9 concentrique au tuyau 6 servant à acheminer la vapeur vers l'échangeur 7. Une gaine isolante 10 enferme le tout tel qu'illustré sur la figure 4...

L'échangeur de chaleur 7 est une cheminée concentrique à simple ou double paroi du type utilisé dans les chauffe-eau isolés alimentés par des combustibles. La condensation de la vapeur se fait sur la paroi interne 12 de l'échangeur 7, la vapeur transférant sa chaleur de condensation par conduction à travers la paroi de l'échangeur puis par convection à l'eau du réservoir 11. Le liquide 13 résultant de la condensation s'accumule alors à la base de l'échangeur 7.

Une pompe 14 est enfin prévue pour retourner le liquide 13 vers le séparateur 4 via le tuyau 9. Tel qu'illustré sur la figure 2, la pompe 14 est constituée de deux récipients concentriques 15-16 séparés entre eux, laissant un faible volume accessible entre leurs parois. Le récipient externe 15 qui est fermé hermétiquement, est réalisé en un métal conducteur permettant à l'élément de chauffage 17 en forme de manchon de lui transmettre sa chaleur. Le récipient externe 15 est relié à l'échangeur 7 par une entrée de liquide 18 pourvue d'un clapet 19, ainsi que par une soupape à vapeur comprenant un pointeau mobile 20, une ouverture 21 et un tube d'échappement 22. L'entrée 18 est placée de façon à ce que le liquide entrant tombe par gravité dans le récipient interne.

Le récipient interne 16 est fait en un matériau isolant. Ce récipient 16 comporte à sa base une ouverture 23 par laquelle peut s'échapper du liquide pour emplir le volume entre les parois des deux récipients concentriques 15-16. En l'absence de liquide dans le réservoir 16, cette ouverture est obstruée par un pointeau 24 relié au pointeau supérieur 20 par une tige 25 passant à travers un flotteur 26.

La pompe fonctionne comme suit:

Lorsque le récipient 16 est vide, le liquide à pomper 13 pénètre dans le récipient 16 par le tuyau 18, le clapet 19 étant abaissé par le poids du liquide 13. Le poids de la tige 25 et des deux pointeaux presse le pointeau 24 dans l'ouverture 23 et ainsi empêche le liquide de s'échapper entre les parois. Le pointeau 20 dégage l'ouverture 21 de la soupape à vapeur dont le tube d'échappement 22 est choisi de façon à dépasser le niveau du liquide 13 dans l'échangeur 7. Au fur et à mesure que le liquide emplit le récipient, le flotteur 26 s'élève. Lorsqu'il atteint la base du pointeau 20, il le soulève pour fermer l'ouverture 21 ce qui dégage instantanément l'ouverture 23 pour laisser écouler le liquide entre les deux parois. La paroi du réservoir 15 étant maintenue chaude par l'élément de chauffage 17, le liquide s'évapore instantanément pour créer une brusque hausse de pression dans la pompe. Ceci a pour effet de fermer le clapet 19 et d'ouvrir le clapet 27 pour refouler le liquide accumulé dans le récipient 16 via un conduit 28 relié au tuyau 9. Lorsque le récipient 16 est vide, le flotteur 26 vient par gravité s'appuyer sur le pointeau 24 et ainsi forcer le pointeau 20 retenu par la pression interne du récipient 15 à dégager l'ouverture 21. Les pressions s'équilibrant entre l'échangeur 7 et la pompe 14, le clapet 19 s'ouvre pour laisser le liquide 13 à nouveau emplir la pompe. Le cycle se répète alors.

Il est à signaler que le système de chauffage d'eau précédemment décrit peut faire l'objet de nombreuses variantes, sans pour autant s'écarter de son principe.

Ainsi par exemple, les canalisations reliant le séparateur 4 à l'échangeur 7 et à la pompe 14 du système peuvent être parallèles au lieu d'être concentriques.

De plus, tel qu'illustré sur la figure 5, le prélèvement de la partie du liquide à vaporiser au sein de la pompe peut être effectué par d'autres moyens, comme par siphonage à travers un siphon 29 s'amorçant automatiquement dès que le niveau du liquide a atteint une valeur prédéterminée. Dans ce cas particulier, le flotteur 26 continue à servir pour fermer la soupape à vapeur 21 lorsque le niveau monte dans le réservoir interne et pour ouvrir celle-ci lorsque le liquide accumulé a été expulsé.

- 12 -

0125985

<u>REVENDICATIONS</u>

1. Système de chauffage d'eau par énergie solaire opérant en circuit fermé et utilisant le changement de phase d'un fluide caloporteur comme mode d'échange thermique, du type comprenant :

- au moins un capteur (2) exposé au soleil pour transférer l'énergie radiante du soleil à un fluide caloporteur et ainsi transformer ledit fluide en un mélange liquide-vapeur ;

- un échangeur de chaleur (7) pour transférer à de l'eau la chaleur emmagasinée par le fluide caloporteur dans le capteur,

- une pompe (14) pour retourner le fluide caloporteur vers le capteur (2) ; et

- des canalisations (3) (6) et (9) pour relier ensemble les divers éléments mentionnées ci-dessus ;

caractérisé en ce qu'il comprend en outre :

- un séparateur (4) de phase raccordé à l'extrémité du capteur où sort le mélange liquide-vapeur ;

- une canalisation (5) pour retourner le liquide récupéré dans le séparateur de phase vers l'autre extrémité du capteur de façon à ce que celui-ci soit constamment mouillé ; et

- deux canalisations (6) et (9) reliant le séparateur à l'échangeur, l'une (6) pour faire circuler la vapeur vers l'échangeur où elle va se condenser et l'autre (9) pour permettre le retour du liquide condensé vers le séparateur (4) par l'intermédiaire de la pompe (14) ; ladite pompe (14) étant située en dessous du niveau moyen du liquide dans l'échangeur de façon à assurer un retour du liquide accumulé à la base de l'échangeur (7) vers le séparateur (4).

2. Système selon la revendication (1), caractérisé en ce que la pompe (14) assure le retour du liquide accumulé à la base de l'échangeur (7) vers le séparateur (4) par action d'une pression de vapeur générée à partir d'une partie dudit liquide accumulé, ladite pompe incluant pour ce faire un mécanisme de prélèvement de liquide et une source de chaleur (17) pour générer de la vapeur à partir de la partie du liquide ainsi prélevé.

3. Système selon la revendication 1 ou 2, caractérisé en ce que la canalisation (9) de retour du liquide vers le séparateur est concentrique à celle (6) servant à acheminer la vapeur vers l'échangeur, les deux canalisations (6) et (9) étant contenues dans une gaine isolante.

4. Système selon la revendication 2, caractérisé en ce que l'échangeur de chaleur (7) est une cheminée concentrique du type utilisé dans les chauffe-eau isolés du type standard à paroi simple ou double.

5. Système selon la revendication 4, caractérisé en ce que la condensation de la vapeur se fait sur la paroi interne (12) de l'échangeur (7), ladite vapeur communiquant sa chaleur d'abord par conduction à la paroi interne (12) de l'échangeur, puis par convection à l'eau entourant ladite paroi interne de l'échangeur.

6. Système selon la revendication 2, caractérisé en ce que.la pompe (14) est constituée de deux récipients concentriques (15) (16) espacés l'un de l'autre de façon à maintenir un faible volume accessible entre leurs fonds et leurs parois, le récipient externe (15) étant fermé hermétiquement et relié à l'échangeur (7) par une entrée de liquide (18) pourvue d'un clapet (19), ladite entrée (18) étant placée de façon à ce que le liquide entrant s'accumule dans le récipient interne (16), ainsi que par une soupape à vapeur (22), le récipient interne (16) étant en communication dans sa partie supérieure avec la partie supérieure du récipient externe et étant relié au séparateur (4) par une sortie (28) de liquide via un clapet (27).

7. Système selon la revendication (6), caractérisé en ce que le récipient interne (16) comporte à sa base une ouverture (23) par laquelle peut couler une partie du liquide pour emplir le volume entre les parois des deux récipients concentriques, le mécanisme de prélèvement étant alors constitué par une tige (25) pourvue d'un pointeau d'obturation à chacune de ses extrémités (20), (24) pour inversement ouvrir et fermer l'ouverture (23) à la base du récipient interne et la soupape à vapeur (22), et par un flotteur (26) capable d'exercer une action sur la tige (25) en fonction du niveau du liquide accumulé dans le réservoir interne.

8. Système selon la revendication 6, caractérisé en ce que le mécanisme de prélèvement est un siphon (29) capable de s'amorcer seul pour amener une partie du liquide s'accumulant dans le réservoir interne (16) entre les parois des deux récipients concentriques dès que le niveau dans le récipient interne a atteint une certaine hauteur prédéterminée.

9. Système selon la revendication 7 ou 8, caractérisé en ce que seul le récipient externe (15) est en contact avec la source de chaleur (17) capable de générer de la vapeur en amenant à ébullition la partie du liquide ayant coulé entre les parois.

10. Système selon la revendication 2 ou 9, caractérisé en ce que la source de chaleur (17) utilisée est un manchon ou une plaque chauffante électrique.

Fig. 1

Fig. 2

Fig. 3

0125985

3

0125985

Fig. 4

Fig. 5